# EUROPEAN PATENT SPECIFICATION

(11) **EP 1 709 346 B1**
(45) Date of publication and mention of the grant of the patent: **19.03.2008**
(21) Application number: 05700591.0
(22) Date of filing: 21.01.2005
(51) Int. Cl.: F16H 3/04, F16H 3/54, F16H 15/46, F16H 15/56

(54) **A MULTISTAGE PLANETARY GEAR**
MEHRSTUFIGES PLANETENGETRIEBE
TRAIN PLANETAIRE MULTIETAGE

(30) Priority: 22.01.2004 DK 200400081
(43) Date of publication of application: 11.10.2006
(73) Proprietor: Rotrex A/S, 2730 Herlev (DK)
(72) Inventor: KOLSTRUP, Anders, Peter, DK-2500 Valby (DK)
(74) Representative: Larsen, Hans Ole
(86) International application number: PCT/DK2005/000041
(87) International publication number: WO 2005/071287

(56) References cited:
- WO-A1-02/064997
- DE-A- 10 201 656
- US-B2- 6 609 505

## Description

### State of the art

The invention relates to a multistage planetary gear incorporated in a gear housing and comprising an outer ring, planet wheels and a sun shaft as defined in the preamble of claim 1 and 2, respectively, and known from DE-A-1020 1656.

Planetary gears of this type are used in particular where high speeds and transfers of great power are needed. Compressors for internal combustion engines may be mentioned as an example.

An example of a two-stage gear of the planetary gear type is known from US 6 609 505, which gear is useful for the driving of a centrifugal charger for an internal combustion engine.

This gear is composed of two entire planetary gears which are interconnected such that selected parts of the gear may be braked. This, however, is a relatively complicated gear to manufacture, and since many elements are incorporated in the gear, it is also subject to great wear which may cause break-down, just as the efficiency is reduced correspondingly. Finally, the gear takes up much space because of its structure.

A planetary gear for high speeds is moreover known from WO 02/064997, which gear, however, does not have a gear ratio that can exceed 13.6 : 1 because of the three planet wheels which will make physical contact with each other at higher gearings.

### Object of the invention

The object of the invention is to improve known multistage gears with the objective of making the gears compact, operationally reliable and suitable for extremely high speeds and transfer of high moments.

This is achieved according to the invention by a multistage planetary gear having the features of claim 1 and 2, respectively.

A compact two-stage gear may be constructed in this simple manner, where the transfer of the moment is utilized in the traction between the outer ring and the planet wheels, as described in WO 02/064997, when the clutch is not activated. Upon activation, the movement will be transferred via the gear transmission, which will result in a high gearing corresponding to the configuration of the gear wheel engagement.

When, as stated in claim 3, the clutch is constructed as an electromagnetic clutch, it may be remote-controlled and thereby be controlled by an external controller.

When, as stated in claim 4, the tracks are distributed evenly, a high transfer of moment via the elements may be ensured.

When, as stated in claim 5, the elements are provided with a tractive force toward the axis of rotation of the gear, a reliable and controllable clutch function is ensured.

### The drawing

Examples of embodiments according to the invention will be described more fully below with reference to the drawing, in which
- fig. 1: shows a sectional view of the principle in a first embodiment,
- fig. 2: shows a sectional view of the principle in a second embodiment,
- fig. 3: shows an end view of the drive plate with the tracks for the clutch element as shown in fig. 2,
- fig. 4: shows a schematic diagram of a third embodiment, not covered by the claims and
- fig. 5: shows a sectional view of the principle in a fourth embodiment.

### Description of the exemplary embodiments

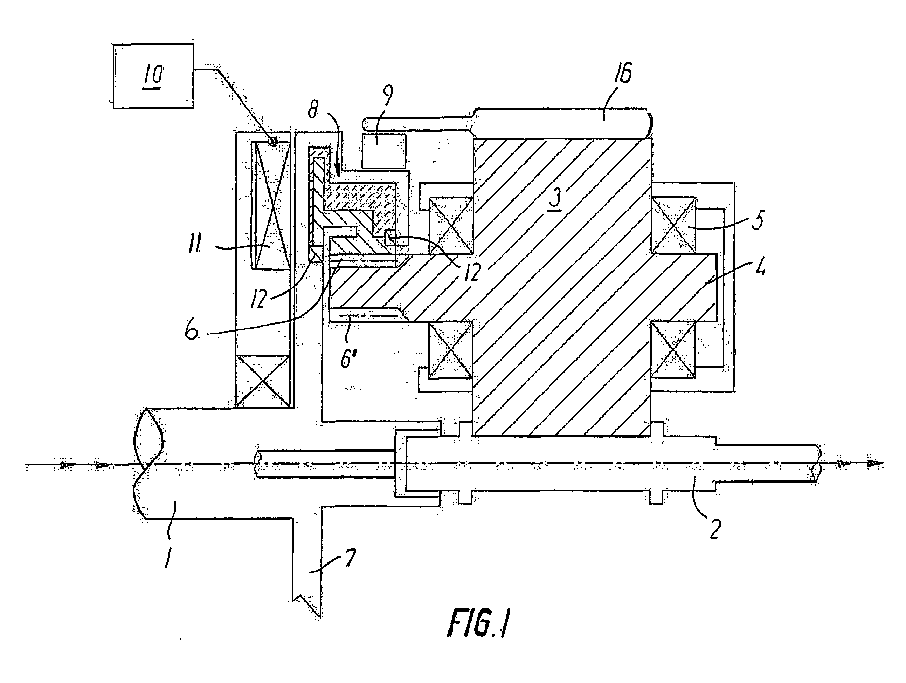

The first exemplary embodiment is indicated in fig. 1 and shows a planetary gear which is expanded with a ring gear 6 on the stub shafts 4 of the planet wheels 3.

This provides a compact and relatively simple gear at low production costs and with great operational reliability.

As indicated in fig. 1, the gear comprises a drive shaft, the input shaft 1, which is connected with a drive plate 7.

The clutch 8 comprises a toothed rim 6 on its one clutch part with internal toothing which rotates with the clutch. The clutch is constructed as an electromagnetic clutch which is isolated from the oil in the gear housing by means of gaskets 12.

A coil 11 is mounted on the gear housing, which coil 11 may be activated and controlled by means of a module 10 which allows remote control of the gear.

The movable part of the clutch comprises a magnetic core which will interconnect the parts when the coil 11 is energized.

The planetary gear has an outer ring 16 which drives a set of planet wheels 3, which in turn drive the sun shaft 2. The planet wheels 3 are mounted on the gear housing by means of preferably high speed bearings 5 on both sides.

The clutch part, which rotates with the drive plate 7, is connected with the outer ring 16 via a one-way clutch 9.

The mode of operation of this exemplary embodiment of the gear will be explained now.

When the toothed rim 6 of the clutch 8 is held to the drive plate 7, the output shaft 2 will be connected with the toothed rim 6 because of the tooth engagement with the planet shaft 4. The planet wheels 3 will hereby rotate at a considerably higher speed than the input shaft 1.

Where the clutch 8 is not activated, the input shaft 1 will drive the outer ring 1 via the one-way clutch 9. In this position, the planet wheels 3 are driven at a lower speed of rotation than in the first-mentioned position with engagement.

The output shaft 2 will still rotate faster than the input shaft 1, but not as fast as where the toothed rim is engaged and thereby held.

Other types of clutches may be used instead of the mentioned magnetic clutch 8.

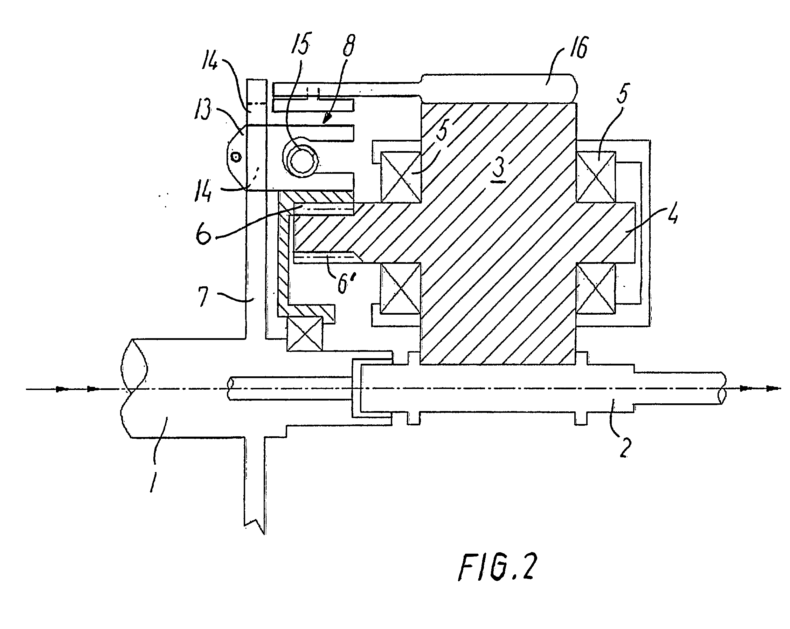

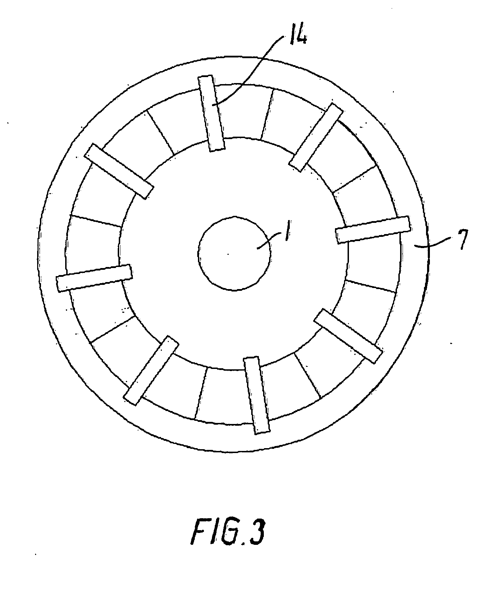

A second exemplary embodiment is shown in figs. 2 and 3.

In this example, the clutch 8 is constructed as a centrifugal clutch with elements 13 which may be moved in a radial direction in tracks 14 on the drive plate 7, as shown in fig. 3.

The input shaft 1 is connected with the drive plate 7, and also a gear system 6 is connected with the drive plate 7.

The elements 13 of the centrifugal clutch have a mass which is adapted to the function of the clutch, and to ensure the mutual position of the individual elements 13 at lower speeds of rotation, there is provided a tensile spring 15 which may extend through all the elements 13, as indicated in fig. 2.

The effect of this exemplary embodiment will be described now.

When the input shaft 1 rotates at a predetermined low speed, the spring 15 holds the elements 13 against the toothed rim 6 and meshes with it.

The toothed rim 6 is hereby driven by the drive plate 7 with a gearing relative to the planet wheels 3. This results in a significant gearing-up of the planet wheels 3 and thereby of the speed of rotation of the sun shaft 2.

Where the input shaft 1 is given a higher speed which is above the predetermined speed, the elements 13 will overcome the spring force by means of the centrifugal force and move outwards and thereby mesh with the outer ring 16. A direct connection between the input shaft 1 and the outer ring 16 will be established hereby without gearing. This will drive the planet wheels 3 with a lower gearing than at the low speed of rotation, and this ensures that the sun shaft 2 will rotate at a higher speed than the input shaft 1, but still with a lower gear ratio than at the above-mentioned low speed of rotation of the input shaft 1.

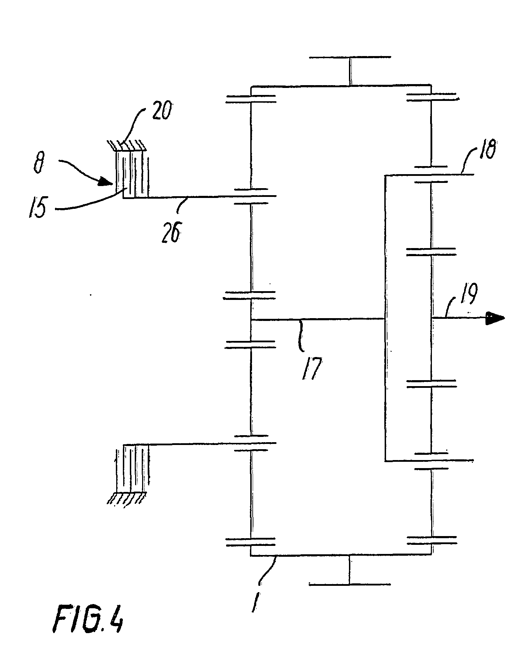

A third exemplary embodiment, which is shown in fig. 4 in the form of a schematic diagram, will now be described more fully.

The gear comprises a ring gear which also constitutes the input shaft 1, and which is coupled to two sets of planet wheels to form a primary system 26 and a secondary system 18 and with two separate planet wheel holders and two sun wheels 17, 19.

The brake 8, which may be operated from the outside, remote-controlled, has a rotating part 15 which may cause the primary system 26, 17 to rotate freely with the ring gear 1 or, upon engagement, to hold it relative to the gear housing 20.

When the primary system is held, the primary sun wheel 17 is caused to rotate in the opposite direction and with a considerably higher number of revolutions than the input shaft 1.

Via the shaft, the primary sun wheel 17 is firmly connected with the planet wheel holder 18 of the secondary system, which is thereby caused to rotate at the same speed as the speed of the primary sun wheel 17.

The planet wheels moreover cause the secondary sun wheel 19, which is also coupled to the output shaft, to rotate at a considerably higher speed when the primary planet system 26 is held relative to the gear housing 20.

If the controllable clutch 15 is configured with a controllable slip, the gear may operate as a continuously variable gear in this embodiment.

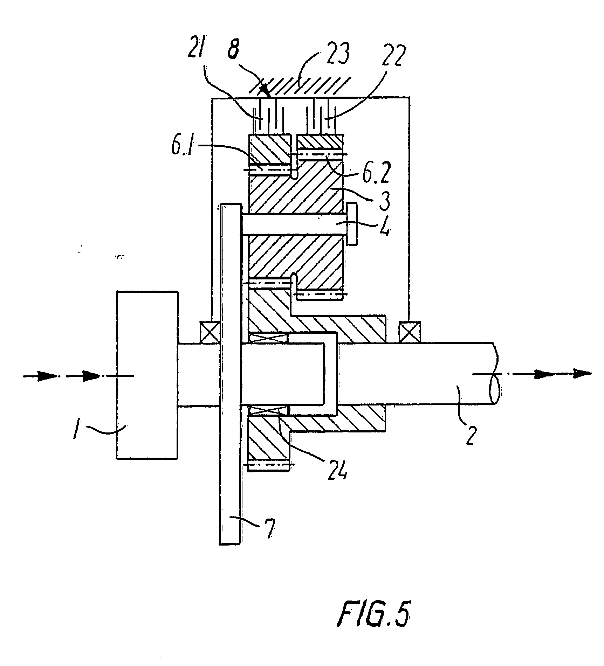

Finally, a fourth exemplary embodiment will be described with reference to fig. 5, which illustrates an example of a three-stage gear.

The gear is driven by an input shaft 1 which is connected with a drive plate 7 on which the planet wheel shafts 4 are secured.

The planet wheels 3 rotate on these shafts 4, said planet wheels 3 having one or more gear stages. In the example shown, two stages 6.1 and 6.2.

The gear is provided with a brake system 8 which comprises a brake 21, 22 for each gear stage 6.1 and 6.2. Each of the gear stages may hereby be locked individually.

The sun wheel is provided with a one-way coupling 24 to the sun shaft 2.

The mode of operation of this exemplary embodiment will be described now.

When the brakes 21, 22 are not engaged, the planet wheels 3 cannot transfer the moment from the input shaft 1 to the sun wheel 2, since the ring gears 6.1 and 6.2 participate in the rotation.

Because of the one-way bearing 24, the transfer of moment will take place via the bearing 24, and the output shaft 2 will rotate at the same speed as the input shaft 1, since the bearing 24 "locks" the gear.

If the brake 22 is activated, it will lock the ring gear 6.2 and cause the planet wheels 3 to rotate about their shaft 4.

Since the gear stages 6.1 and 6.2 are firmly connected, the sun wheel is caused to rotate at a speed which is greater than and with the same direction of rotation as the input shaft 1. In this state of operation, the one-way bearing 24 is free.

If the other brake 21 is activated at the same time as the first brake 22 is disengaged, the planet wheels 3 will rotate at an even higher speed, since the gearing between the outer ring and the stage 6.1 is higher than the first-mentioned gearing.

The output shaft 2 will hereby be brought to the greatest possible speed of rotation.

It will be appreciated that more than the mentioned three stages may be provided in the gear, it being possible to construct gears with an arbitrary number of gear stages with the same structure.

## Claims

1. *A multistage planetary gear incorporated in a gear housing and comprising*
- *a driving part (7),*
- *an outer ring (16) meshing with* a *set of planet wheels (3) which in turn drive a sun shaft (2) as an output shaft,*
- *a clutch (8) mounted between **said** driving part and said outer ring (16),*
- *said planet wheels are mounted via its planet shafts to said gear housing,*
- *whereby said clutch, in the engaged state, transfers the driving movement via a toothed ring (6) to one element of said planetary gear,*
- *and whereby when said clutch is in the disengaged state movement is transferred via a one-way clutch (9) to another element of said planetary gear, **characterized in that***
- *an external toothing (6') is provided on the planet shaft* (4) *being in engagement with an internal toothing provided on said toothed ring (6) of said clutch (8), which, in the engaged state, transfers the driving movement to said external toothing (6) of said planet shafts,*
- *whereby in the disengaged state of said clutch (8) movement is directly transferred to said outer ring (16) via said one-way clutch (9).*

2. *A multistage planetary gear incorporated in a gear housing and comprising*
- *a driving part (7),*
- *an outer ring (16) meshing with a set of planet wheels (3) which in turn drive a sun shaft (2) as an output shaft,*
- *a clutch (8) mounted between **said** driving part and said outer ring (16),*
- *said planet wheels are mounted via its planet shafts to said gear housing,*
- *whereby said clutch is able to transfer the driving movement via a toothed ring (6) to one element of said planetary gear,*
- *and whereby said clutch is also able to transfer movement to another element of said planetary gear, **characterized in that***
- *said clutch is a centrifugal clutch comprising clutch elements (13) which are movable in radially extending tracks (14) in the driving part (7),*
- *an external toothing (6') is provided on the planet shaft (4),*
- *whereby said clutch elements (13) are capable of coupling the drive movement from the driving part (7) to the outer ring (16) at a high speed and*
- *whereby said clutch elements (13) are capable of coupling the drive movement from the driving part (7) via said toothed ring (6) of said clutch to said external toothing (6') of the planet shafts at a lower speed.*

3. A planetary gear according to claim 1, **characterized in that** the clutch (8) is of the electromagnetic type which may be remote-controlled (10).

4. A planetary gear according to claim 2, **characterized in that** the tracks (14) are evenly distributed with an equidistant mutual spacing on the drive part (7).

5. A planetary gear according to claims 2 and 4, **characterized in that** the individual clutch elements (13) are provided with a transverse recess in which a tensile spring (15) extends to pull the elements (13) toward the axis of rotation.

## Patentansprüche

1. Ein mehrstufiges Planetengetriebe, das in einem Getriebegehäuse eingebaut ist und aufweist
- ein Antriebsteil (7),
- einen Außenring (16), der mit einem Satz von Planetenrädern (3) kämmt, die wiederum eine Sonnenwelle (2) als eine Abtriebswelle antreiben,
- eine Kupplung (8) die zwischen dem Antriebsteil und dem Außenring (1E) angeordnet ist,
- die Planetenräder sind über ihre Planetenwelle an dem Getriebegehäuse befestigt,
- wobei die Kupplung, in dem in Eingriff befindlichen Zustand, die Antriebsbewegung über einen gezahnten Ring (6) auf ein Element des Planetengetriebes überträgt,
- und wobei, wenn sich die Kupplung in dem gelösten Zustand befindet, Bewegung über eine einfach gerichtete Kupplung (9) auf ein anderes Element des Planetengetriebes übertragen wird, **dadurch gekennzeichnet, dass**
- eine Außenverzahnung (6') an der Planetenwelle (4) vorgesehen ist, die in Eingriff mit einer Innenverzahnung befindlich ist, die auf dem gezahnten Ring (6) der Kupplung (8) vorgesehen ist, die, in dem in Eingriff befindlichen Zustand, die Antriebsbewegung auf die Außenverzahnung (6) der Planetenwellen überträgt,
- wobei in dem gelösten Zustand der Kupplung (8) Bewegung direkt auf den Außenring (16) über die einfach gerichtete Kupplung (9) übertragen wird.

2. Ein mehrstufiges Planetengetriebe, das in einem Getriebegehäuse eingebaut ist und aufweist
- ein Antriebsteil (7),
- einen Außenring (16), der mit einem Satz von Planetenrädern (3) kämmt, die wiederum eine Sonnenwelle (2) als eine Abtriebswelle antreiben,
- eine Kupplung (8) die zwischen dem Antriebsteil und dem Außenring (16) angeordnet ist,
- die Planetenräder sind über ihre Planetenwellen an dem Getriebegehäuse befestigt,
- wobei die Kupplung in der Lage ist, die Antriebsbewegung über einen gezahnten Ring (6) auf ein Element des Planetengetriebes zu übertragen,
- und wobei die Kupplung ebenfalls in der Lage ist, Bewegung auf ein anderes Element des Planetengetriebes zu übertragen, **dadurch gekennzeichnet, dass**
- die Kupplung eine Fliehkraftkupplung ist, mit Kupplungselementen (13), die auf sich radial erstreckenden Bahnen (14) in dem Antriebsteil (7) beweglich sind,
- eine Außenverzahnung (6') auf der Planetenwelle (4) vorgesehen ist,
- wobei die Kupplungselemente (13) in der Lage sind, die Antriebsbewegung von dem Antriebsteil (7) zu dem Außenring (16) bei einer hohen Geschwindigkeit zu kuppeln, und
- wobei die Kupplungselemente (13) in der Lage sind, die Antriebsbewegung von dem Antriebsteil (7) über den gezahnten Ring (6) der Kupplung auf die Außenverzahnung (6') der Planetenwellen bei einer geringern Geschwindigkeit zu kuppeln.

3. Planetengetriebe nach Anspruch 1, **dadurch gekennzeichnet, dass** die Kupplung (8) von elektromagnetischer Bauart ist, die fernbedienbar (10) sein kann.

4. Planetengetriebe nach Anspruch 2, **dadurch gekennzeichnet, dass** die Bahnen (14) gleichmäßig mit einem äquidistanten, gegenseitigen Abstand auf dem Antriebsteil (7) verteilt sind.

5. Planetengetriebe nach Ansprüchen 2 und 4, **dadurch gekennzeichnet, dass** die einzelnen Kupplungselemente (13) mit einer Querausnehmung versehen sind, in der sich eine Zugfeder (15) erstreckt, um die Elemente (13) in Richtung auf die Drehachse zu ziehen.

## Revendications

1. Train planétaire à plusieurs étages, incorporé dans un boîtier d'engrenages et comprenant :
- une pièce d'entraînement (7);
- une couronne extérieure (16) s'engrenant avec un jeu de satellites (3) qui à leur tour entraînent un arbre planétaire (2) jouant le rôle d'arbre de sortie ;
- un embrayage (8) monté entre ladite pièce d'entraînement et ladite couronne extérieure (16),
- lesdits satellites étant montés via leurs axes de satellites sur le boîtier d'engrenages,
- ce par quoi ledit embrayage, à l'état embrayé, transfert le mouvement d'entraînement via une couronne dentée (6) à un élément dudit train planétaire,
- et ce par quoi lorsque ledit embrayage est à l'état débrayé le mouvement est transféré via une roue libre (9) à un autre élément dudit train planétaire, **caractérisé en ce qu'**une denture extérieure (6') est disposée sur l'axe de satellite (4) en engagement avec une denture intérieure disposée sur ladite couronne dentée (6) dudit embrayage (8), lequel, à l'état embrayé, transfère le mouvement d'entraînement à ladite denture extérieure (6) desdits axes de satellites,
- ce par quoi à l'état débrayé dudit embrayage (8) le mouvement est transféré directement à ladite couronne extérieure (16) via ladite roue libre (9).

2. Train planétaire à plusieurs étages incorporé dans un boîtier d'engrenages et comprenant :
- un élément d'entraînement (7) ;
- une couronne extérieure (16) s'engrenant avec un jeu de satellites (3) qui à leur tour entraînent un arbre planétaire (2) jouant le rôle d'arbre de sortie ;
- un embrayage (8) monté entre ladite pièce d'entraînement (7) et ladite couronne extérieure (16),
- lesdits satellites (3) étant montés via leurs axes de satellites sur le boîtier d'engrenages,
- ce par quoi ledit embrayage est en mesure de transférer le mouvement d'entraînement via une couronne dentée (6) à un élément dudit train planétaire,
- et ce par quoi ledit embrayage est également en mesure de transférer le mouvement à un autre élément dudit train planétaire, **caractérisé en ce que** :
- ledit embrayage est un embrayage centrifuge comprenant des éléments d'embrayage (13) qui peuvent se déplacer dans des gorges s'étendant radialement (14) sur la pièce d'entraînement (7) ;
- une denture extérieure (6') est disposée sur l'arbre planétaire (4),
- ce par quoi lesdits éléments d'embrayage (13) sont en mesure de relier à vitesse élevée le mouvement d'entraînement en provenance de la pièce d'entraînement (7) avec la couronne extérieure (16) et
- ce par quoi lesdits éléments d'embrayage (13) sont en mesure de relier à vitesse lente le mouvement d'entraînement en provenance de la pièce d'entraînement (7) via ladite couronne dentée (6) dudit embrayage (8) avec ladite denture extérieure (6') des axes de satellites.

3. Train planétaire selon la revendication 1, **caractérisé en ce que** l'embrayage (8) est du type électromagnétique qui peut être commandé à distance (10).

4. Train planétaire selon la revendication 2, **caractérisé en ce que** les gorges (14) sont régulièrement réparties sur la pièce d'entraînement (7) avec un espacement mutuellement équidistant.

5. Train planétaire selon les revendications 2 et 4, **caractérisé en ce que** les éléments d'embrayage considérés séparément (13) sont pourvus d'un creux transversal dans lequel s'étend un ressort de tension (15) de façon à tirer les éléments (13) en direction de l'axe de rotation.
